# EUROPÄISCHE PATENTANMELDUNG

(11) **EP 2 343 349 A1**
(43) Veröffentlichungstag der Anmeldung: **13.07.2011**
(21) Anmeldenummer: 10405248.5
(22) Anmeldetag: 24.12.2010
(51) Int. Cl.: C10B 53/02, C10C 5/00, C10B 47/16, C10B 49/04, C10B 1/04

(54) **Anlage zur Herstellung von gedarrtem Holz, Holzkohle, Holzteer, Holzessig und Synthesegas**

(30) Priorität: 11.01.2010 CH 292010
(71) Anmelder: Breiter, Mark, 6999 Astano (CH)
(72) Erfinder: Breiter, Mark, 6999 Astano (CH)
(74) Vertreter: Gaggini, Carlo

(57) **Zusammenfassung**

Die vorliegende Erfindung betrifft eine Anlage zur Herstellung von gedarrtem Holz, Holzkohle, Holzteer, Holzessig und Synthesegas aus einer Vielfalt von organischen Rohmaterialen wie Stängel, Stroh und anderen biogenen Abfällen in körniger, pelletisierter oder geschnitzelter Form. Eine Zuführung ermöglicht das Einbringen von heissen Abgasen aus Öfen oder Verbrennungsmotoren durch das Rohmaterial, und drei Brenner ausgerüstet mit einzeln einstellbaren Luftzuführungen erlauben eine flexible Prozessführung der Pyrolyse. Die Vorrichtung kann im in Einzelchargen oder kontinuierlich betrieben werden und verfügt über eine Rohmaterialzuführung, ein trichterförmiges Pyrolysegefäss montiert auf einer zylinderförmigen Basis mit einem zentralen Kamin und einem Aussenzylinder, zum Zwecke der Durchleitung des Synthesegases nach unten und auf der Aussenseite des Pyrolysegefässes und der Sammlung der kondensierbaren Flüssigkeiten mittels eines Kühlmantels. Das zentrale Kamin nimmt die heissen Abgase und/oder das verbleibende Synthesegas auf und leitet diese zum Kaminausgang zur weiteren Verwendung.

## Beschreibung

### Zusammenfassung:

Die vorliegende Erfindung betrifft eine Anlage zur Herstellung von gedarrtem Holz, Holzkohle, Holzteer, Holzessig und Synthesegas aus einer Vielfalt von organischen Rohmaterialen wie Stängel, Stroh und anderen biogenen Abfällen in körniger, pelletisierter oder geschnitzelter Form. Eine Zuführung ermöglicht das Einbringen von heissen Abgasen aus Öfen oder Verbrennungsmotoren durch das Rohmaterial, und drei Brenner ausgerüstet mit einzeln einstellbaren Luftzuführungen erlauben eine flexible Prozessführung der Pyrolyse. Die Vorrichtung kann im in Einzelchargen oder kontinuierlich betrieben werden und verfügt über eine Rohmaterialzuführung, ein trichterförmiges Pyrolysegefäss montiert auf einer zylinderförmigen Basis mit einem zentralen Kamin und einem Aussenzylinder, zum Zwecke der Durchleitung des Synthesegases nach unten und auf der Aussenseite des Pyrolysegefässes und der Sammlung der kondensierbaren Flüssigkeiten mittels eines Kühlmantels. Das zentrale Kamin nimmt die heissen Abgase und/oder das verbleibende Synthesegas auf und leitet diese zum Kaminausgang zur weiteren Verwendung.

### Beschreibung der Erfindung:

Pyrolyseprozesse von gestückelten oder kornförmigen Rohmaterialen im Bereich einer Feuchte von 5 bis 20 Prozent sind geprägt von tiefer Wärmeleitung im Inneren des Pyrolysegefässes. Aus diesem Grund ergibt die Pyrolyse von Einzelchargen mit genannten Rohmaterialien ungleichmässige Darre- und Verkohlungsgrade. In kontinuierlichen Verfahren wird diese beschränkte Wärmeleitung durch Vorrichtungen kompensiert, welche das Rohmaterial in Bewegung halten und dieses genügend Hitze aussetzt, um dadurch einen gleichmässigen Darre-und Verkohlungsgrade zu erzielen. US 4,308,103 wählt horizontal angebrachte Schaufeln zu diesem Zweck während US 4,583, 992 einen Vertikalzylinder mit rotierendem Sieb vorsieht. Diese Vorrichtungen machen den Betrieb komplex und relativ teuer.

Ein weiterer Nachteil ist, dass Synthesegas kondensierbaren Holzteer und Holzessig enthält, welche in einem Arbeitsgang und im Verlauf des Prozesses schwer zu entfernen sind, was die weitere Verwendung in Gasmotoren begrenzt. Der Holzteer tendiert zu kondensieren und sich auf der internen Oberfläche der Pyrolysevorrichtung zu sammeln. Dies führt dazu, dass die Anlage öfters stillgelegt, demontiert und gereinigt werden muss. US 2007/0209923 löst das Problem mittels einer Förderschnecke mit Teerreinigungsstutzen welche während der Funktion demontiert und gereinigt werden können. Diese Lösung ist aber sehr Komplex und teuer.

Die vorliegende Erfindung überwindet beide Nachteile. Die Wärmeleitung im Pyrolysegefäss wird erheblich verbessert, ohne bewegliche Teile, durch die Nähe von heissem Synthesegas, das teilweise oder vollständig verbrannt ist, sowohl von der Aussenseite her, das heisst vom Zwischenraum gebildet durch das Pyrolysegefäss und dem umliegenden Zylinder, als auch Innenseite her, das heisst vom zentralen Kamin her. Die Abscheidung des kondensierbaren Holzteers und des Holzessigs ist in die Anlage integriert mittels des wassergekühlten Mantels an der Aussenseite des trichterförmigen oberen Anlageteils. Der genannte Kühlmantel kann durch Ein- und Auslassventile geregelt werden mit dem Zweck, die Gewinnung von Holzteer und Holzessig zu optimieren.

Das feste, kornförmige, gestückelte oder pelletierte Rohmaterial wird in das Pyrolysegefäss (1) eigebracht, entweder im Einzelchargen oder im kontinuierlichen Verfahren, mit Hilfe einer gasdichten Zuführung (2) aus einem Lagerbehälter, von einem Förderband oder einer Förderschraube. Der Prozess wird angefahren durch die Erhitzung des Rohmaterials mittels des Hauptbrenners (3) an unteren Ende des genannten Gefässes und mit einer externen Energiequelle wie Erdgas, oder kombiniert mit der Einleitung von heissen Abgasen aus Öfen oder Verbrennungsmotoren, welche einen Teil der notwendigen Energie liefern (13). Mit steigender Temperatur im Pyrolysegefäss werden Wasserdampf, kondensierbare Stoffe und Synthesegas (Kohlenmonoxyd, Wasserstoff und Methan) freigesetzt, wobei die kondensierbaren Stoffe an der Oberfläche des Kühlmantels abgeschieden werden (4), mittels einer kreisförmigen und geneigten Rinne gesammelt, und am tiefsten Punkt besagter Rinne abgeführt werden. Ein kreisförmiger Sekundärbrenner mit einzeln regelbarem Luftzutritt (6) ist zum Zweck der Temperatursteuerung im Pyrolysegefäss angebracht, um das gereinigte Synthesegas teilweise oder zur Gänze zu verbrennen oder unverbrannt durchzulassen, indem der Luftzutritt geschlossen wird. Das verbliebende heisse Synthesegas wird an der Aussenwand des Pyrolysegefässes nach unten geleitet dann nach oben durch das Zentralkamin nach oben weg geleitet (7). Der Hauptbrenner unter dem Boden des Pyrolysegerätes kann dazu verwendet werden, das verbliebende Synthesegas ganz oder teilweise zu verbrennen oder es unverbrannt durchzulassen, indem der Luftzutritt geschlossen wird. Am oberen Ende des Zentralkamins kann entweder ein fakultativer Tertiärbrenner mit einzeln regulierbarem Luftzutritt (8) angebracht werden, um das verbleibende Synthesegas zu verbtrennen, oder ein fakultatives Gebläse (9), um das verbleibende Synthesegas einem Tank oder einem Wärmetauscher zuzuführen. Die Förderschnecke (10) zur Entladung des gedarrten Holzes oder der Holzkohle kann im Einzelchargen- oder kontinuierlichen Verfahren betrieben werden. Sie fördert das Prozessgut in eine geschlossenen Ablage (12), wobei an deren Eingang ein Einlass für Wasser oder Dampf montiert werden kann, um die austretende Holzkohle abzuschrecken.

### Beispiel 1: Erzeugung von gedarrtem Holz und kondensierbaren Stoffen

Wenn die Temperatur im Pyrolysegefäss bei einer Temperatur von 200 bis 250 Grad Celsius beibehalten wird, wird das Rohmaterial gedarrt, während praktisch alle kondensierbaren Stoffe gewonnen werden können. Der Vorteil dieses Prozesses ist, dass über 90 Prozent des im Rohmaterial enthaltenen Kohlenstoffs in Form von gedarrtem Holz erhalten bleibt und über lange Zeit lagerfähig bleibt, weil es durch die Darre hydrophob wird. Gedarrtes Holz ist auch sehr schwer abbaubar, wenn es in Böden eingebracht wird, um die Bodenfruchtbarkeit zu erhöhen und/oder atmosphärischen Kohlenstoff zu binden. In diesem Fall kann das gedarrte Holz mit Oxydationsmitteln behandelt werden, um hydrophil zu werden. Pro Tonne Rohmaterial mit 20 Prozent Feuchte können etwa 220 Liter Holzteer und Holzessig gewonnen werden.

### Beispiel 2: Erzeugung von Holzkohle, kondensierbaren Stoffen und Synthesegas

Bei einer Beibehaltung der Temperatur im Pyrolysegefäss zwischen 350 und 500 Grad Celsius werden etwa 50 Prozent des im Rohmaterial enthaltenen Kohlenstoffs in Form von Synthesegas freigesetzt, während der Rest als Holzkohle erhalten bleibt. Wegen derer geringen Dichte können etwa 300-350 Kilogramm Holzkohle aus einer Tonne Rohmaterial erzeugt werden. Abhängig von der Feuchte des Ausgangsmaterials liegen die abgeschiedenen kondensierbaren Stoffe im Bereich von bis gegen 200 Litern auf eine Tonne Rohmaterial.

### Beispiel 3: Erzeugung von kondensierbaren Stoffen, Synthesegas und Asche

Nach der anfänglichen Abscheidung de kondensierbaren Holzteers und Holzessigs, welches im Bereich von 200 Litern pro Tonne Rohmaterial liegt, kann die Pyrolyse bei Temperaturen von 500 bis 750 Grad Celsius gefahren werden. Dies führt zu einer fast vollständigen Vergasung des Rohmaterials in Form von Synthesegas, wobei praktisch keine Holzkohle entsteht ausser Asche, die im Bereich von 8 Prozent in Gewichtsanteilen zum Rohmaterial anfällt, je nach dessen Herkunft und Zusammensetzung.

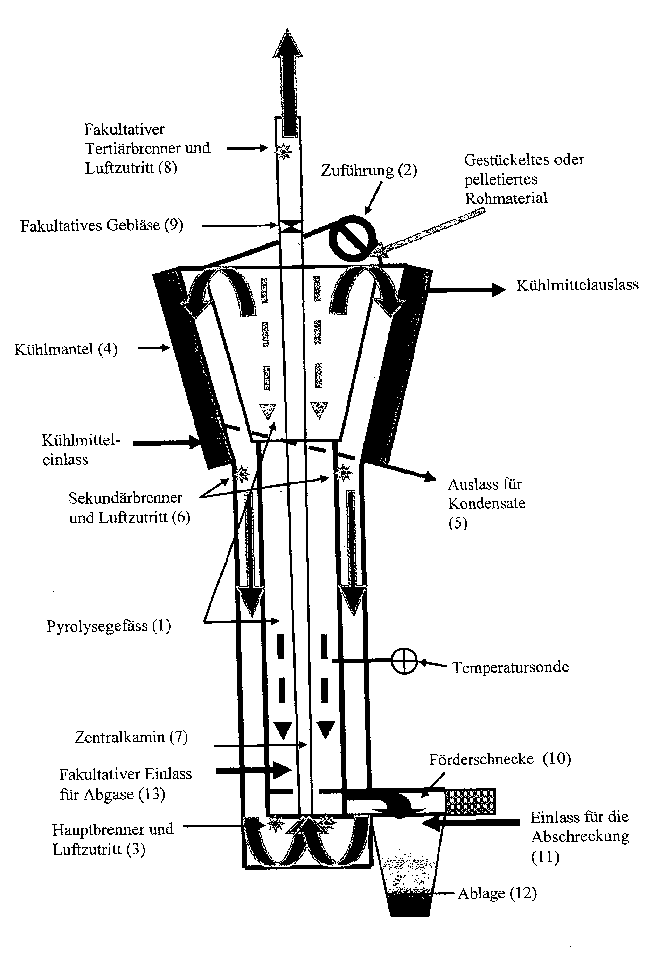

## Patentansprüche

1. Eine grundsätzlich vertikale und zylindrische Anlage zur Pyrolyse von organischen Rohmaterial in trockener Form, versehen mit einem Zentralkamin und einem Aussenzylinder, enthaltend einen trichterförmigen Wassermantel für die Kondensierung und Abscheidung von Holzteer und Holzessig, **dadurch gekennzeichnet, dass** das erzeugte Synthesegas von Holzteer und Holzessig gereinigt, das gereinigte Synthesegas im zwischen dem Pyrolysegefäss und dem Aussenzylinder nach unten geleitet, über den Zentralkamin nach oben geführt und einer weiteren Verwendung zugeführt wird.

2. Eine Anlage gemäss Anspruch 1, versehen mit einer gasdichten Zuführung, aufgesetzt auf dem trichterförmigen oberen Teil des Pyrolysegefässes, die ein Einzelchargen- oder ein kontinuierliches Verfahren erlaubt, mit dem Zweck der Beschickung der Anlage mit kornförmigen, gestückelten oder pelletierten biogenen Abfällen wie Stängel oder Stroh, oder anderen solchen Abfällen in kornförmiger, gestückelter oder pelletierten Form.

3. Eine Anlage gemäss Ansprüchen 1-2, versehen mit einem Kühlmantel rund um den trichterförmigen oberen Teil des Pyrolysegefässes, ausgerüstet mit einem Kühlmitteleinlass und Kühlmittelauslass, mit dem Zweck der Abscheidung von kondensierbaren Stoffen, vorwiegend Holzteer und Holzessig, aus dem austretenden Synthesegas, und versehen mit einer kreisförmigen und geneigten Rinne an der inneren Fläche des Kühlmantels, welche in einen Austritt der Kondensate am tiefsten Punkt der Rinne ausmündet.

4. Eine Anlage gemäss Ansprüchen 1-3, bestehend aus einem Aussenzylinder rund um den zylindrischen Teil des Pyrolysegefässes und versehen mit einem kreisförmigen Sekundärbrenner und einzeln regulierbarem Luftzutritt für die teilweise oder vollständige Verbrennung des gereinigten Synthesegases und für die nachfolgende Weiterführung nach unten in Richtung der Basis der Anlage, in Abhängigkeit der gewünschten Pyrolysetemperatur.

5. Eine Anlage gemäss Ansprüchen 1-4, versehen mit einem kreisförmigen Hauptbrenner mit einzeln regulierbarem Luftzutritt für die teilweise oder vollständige Verbrennung des gereinigten Synthesegases und der nachfolgenden Weiterführung des Gases durch den Zentralkamin, wobei besagter Brenner alternativ mit einer externen Energiequelle betrieben werden kann, so wie Erdgas, zum Zweck der Erreichung von exothermen Bedingungen im Pyrolysegefäss beim Anfahren des Prozesses.

6. Eine Anlage gemäss Ansprüchen 1-5, versehen mit einem fakultativen Einlass für die Einleitung von heissen Abgasen aus Öfen oder Verbrenungsmotoren direkt in das Rohmaterial für die Herstellung von gedarrtem Holz oder Holzkohle.

7. Eine Anlage gemäss Ansprüchen 1-6, bestehend aus einem Zentralkamin für die Beförderung von Hitze und/oder verbleibendem Synthesegases aufwärts zum Kaminausgang, wo ein fakultativer Tertiärbrenner für die vollständige Verbrennung des verbleibenden Synthesegases montiert ist, oder alternativ, wo das verbleibende Synthesegas mittels eines fakultativen Gebläses einem Tank oder Wärmetauscher zugeführt wird.

8. Eine Anlage gemäss Ansprüchen 1-7, bestehend aus einer gasdichten Förderschnecke für gedarrtes Holz oder Holzkohle, ausgelegt für Einzelchargen- und kontinuierlichen Betrieb, mit dem Zweck der Beförderung des Prozessgutes in eine geschlossene Ablage.

9. Eine Anlage gemäss Ansprüchen 1-8, versehen mit einem oder mehreren Temperatursonden zum Zweck der Regulierung des Lufteintritts des Haupt- oder Sekundärbrenners.

10. Eine Anlage gemäss Ansprüchen 1-9, ausgerüstet mit einem fakultativen Einlass von Wasser oder Dampf im oberen Teil der geschlossenen Ablage mit dem Zweck, die von der Förderschnecke transportierten Holzkohle abzuschrecken.

11. Ein Verfahren beruhend auf der Anlage gemäss Ansprüchen 1-10, ausgelegt für den Betrieb mit gekörntem oder gestückelten Rohmaterial bestehend aus Pflanzenstängel, Holzschnitzel, pelletisiertem Stroh oder Mist in Stückgrössen zwischen 2 und 5 Zentimeter Durchmesser.

12. Ein Verfahren beruhend auf der Anlage gemäss Ansprüchen 1-10, ausgelegt für den Betrieb mit Rohmaterial gemäss Anspruch 11, mit einer Materialfeuchte zwischen 5 und 20 Prozent.

13. Ein Verfahren beruhend auf der Anlage gemäss Ansprüchen 1-10, ausgelegt für die Erzeugung von gedarrtem Holz, zusammen mit kondensierbarem Holzteer und Holzessig, bei einer Pyrolysetemperatur zwischen 200 und 250 Grad Celsius.

14. Ein Verfahren beruhend auf der Anlage gemäss Ansprüchen 1-10, ausgelegt für die Erzeugung von Holzkohle, zusammen mit kondensierbarem Holzteer, Holzessig und Synthesegas, bei einer Pyrolysetemperatur zwischen 350 und 500 Grad Celsius.

15. Ein Verfahren beruhend auf der Anlage gemäss Ansprüchen 1-10, ausgelegt für die vollständige Vergasung des Rohmaterials gemäss Ansprüchen 11 und 12, zusammen mit kondensierbarem Holzteer, Holzessig und Asche, bei einer Pyrolysetemperatur zwischen 500 und 750 Grad Celsius.
